# EUROPEAN PATENT APPLICATION

(11) **EP 2 175 402 A1**
(43) Date of publication of application: **14.04.2010**
(21) Application number: 08017382.6
(22) Date of filing: 02.10.2008
(51) Int. Cl.: G06Q 10/00

(54) **At least partially automised reminding of user relevant events**

(71) Applicant: Vodafone Holding GmbH, 40213 Düsseldorf (DE)
(72) Inventor: Lee, Sabrina, 40219 Düsseldorf (DE); Hartl, Mike, 40878 Ratingen (DE)
(74) Representative: Ring & Weisbrodt

(57) **Abstract**

The present invention relates to a method for reminding a user of at least one event relevant for the user in an at least partially automatised way, wherein the user uses a terminal operable in a communication network, which method is characterized by the following process steps:
a) gathering at least one message containing individualized information of a user with respect to at least one event relevant for the user;
b) indexing the words contained in the gathered message;
c) determining key words by means of the indexed words;
d) determining at least one event relevant for the user using the determined key words;
e) gathering at least one local information with respect to the local position of the user's terminal in the communication network;
f) generating at least one reminding message with respect to the determined event in consideration of and/or dependent on the at least one gathered local information and
g) signalizing the generated reminding message by the user's terminal.

Furthermore, the present invention relates to a network node in a communication network, preferably a mobile network according to a GSM, GPRS and/or UMTS radio network standard, which node is at least partially involved in reminding a user of at least one event relevant for the user in an at least partially automatised way and is designed and/or adapted to at least partially carry out a method according to the invention.

Furthermore, the subject of the invention is a terminal to be operated in a communication network, preferably a mobile network according to a GSM, GPRS and/or UMTS radio network standard, which terminal is designed and/or adapted to at least partially carry out a method according to the invention.

## Description

The present invention relates to a method for reminding a user of at least one event relevant for the user in an at least partially automatised way, wherein the user uses a terminal operable in a communication network.

Furthermore, the present invention relates to a network node in a communication network, preferably a mobile network according to a GSM, GPRS and/or UMTS radio network standard, which node is at least partially involved in reminding a user of at least one event relevant for the user in an at least partially automatised way and is designed and/or adapted to at least partially carry out a method according to the invention.

The subject of the present invention is furthermore a terminal to be operated in a communication network, preferably a mobile network according to a GSM, GPRS and/or UMTS radio network standard, which is designed and/or adapted to at least partially carry out a method according to the invention.

Methods, systems and devices realizing various reminding functionalities are known from the state of the art, for example from US 2006/0058948 A1. US 2006/0058948 A1 discloses an organization system for reminding, in which local information with respect to the local position of a user of a terminal operable in a mobile network is connected to time-based information with respect to tasks to be accomplished by the user, wherein the tasks are associated to the respective local position.

The hitherto known reminding functionalities present the problem that the user has to produce a note for himself and then has to be reminded at the correct moment which should be in particular opportune for the user's situation. For this, the user usually has to think about when he has to or wants to be reminded of the note to be reminded in advance.

Furthermore, there is a permanent demand of new and improved solutions for reminding a user of at least one event relevant for the user in an at least partially automatised way, in particular with respect to the realization of automatised assistant services and/or such services that support the user, for example assistance in shopping, fixing and/or coordination of appointments.

In order to be able to satisfy this demand, the present invention proposes a method for reminding a user of at least one event relevant for the user in an at least partially automatised way, wherein the user uses a terminal operable in a communication network, which method is characterized by the following process steps:
a) gathering at least one message containing individualized information of a user with respect to at least one event relevant for the user;
b) indexing the words contained in the gathered message;
c) determining key words by means of the indexed words;
d) determining at least one event relevant for the user using the determined key words;
e) gathering at least one local information with respect to the local position of the user's terminal in the communication network;
f) generating at least one reminding message with respect to the determined event in consideration of and/or dependent on the at least one gathered local information and
g) signalizing the generated reminding message by the user's terminal.

The invention is based upon the knowledge that thanks to the proceeding of the method according to the invention, it is possible to realize an automatised assistant service comprising extended reminding functionalities. According to the invention, users thus get the possibility to gather information with respect to an event that is interesting for them in a manner similar to a note on a piece of paper or the like and to produce from this a reminding message in an automatised way. The fact that the reminding message considers and/or is dependent on the local position of the user advantageously increases the extend and the range of corresponding reminding functionalities with respect to an automatised assistant service.

On the base of the solution according to the invention, the user can for example gather a shopping list as a message containing individualized information. The words contained in the gathered message, in the present case in an exemplarily mentioned shopping list in particular the products needed or to be shopped by the user, will then be indexed and corresponding key words will be determined from the indexed words, in the present case for example the words contained in the gathered message with respect to the shopping list. Based upon the key words, a reminding message will then be advantageously generated in consideration of and/or dependent on the local position of the user. According to the invention, the user can thus be advantageously reminded of the shopping list in an automatised way and simultaneously receive location dependent information with respect to a supermarket or a similar goods selling unit.

An advantageous embodiment of the invention is characterized by gathering complementary information with respect to the event determined in process step d) and by considering this complementary information within the scope of the generation of the reminding message according to process step f). The gathering and consideration of complementary information according to the invention permits further realization and use possibilities of reminding functionalities according to the invention. Thus it is for example possible, in addition to the exemplary reminding of a shopping list, to signalize this shopping list in an automatised way with complementary information with respect to corresponding goods selling units offering goods to be shopped, for example special offers, site plans and/or the like. An especially advantageous embodiment of the invention provides that the complementary information is gathered in consideration of and/or dependent on the at least one determined local information with respect to the local position of the user's terminal in the communication network. Thus, the user can be for example reminded in an automatised way of the shopping list, if he is staying close to a goods selling unit.

Another advantageous embodiment of the invention provides that the message containing individualized information is gathered by a voice entry realized by means of the user's terminal and/or by a text entry realized by means of the user's terminal. The possibility of gathering the message by means of a voice entry advantageously allows the use of a natural voice for a reminding functionality according to the invention, in particular such that the user gets the impression to be quasi supported by a true assistant. Advantageously, a voice message gathered by a voice entry is converted into a text message. A voice entry or voice message is advantageously gathered and/or converted into a text entry or text message either by means of the user's terminal or by means of a network node of the communication network. Herein, the voice message can be generated by the terminal itself and converted into a text message, for which purpose the terminal comprises corresponding gathering and conversion means. Furthermore, the voice message can be gathered within the scope of a communication connection between the terminal and the network node of the communication network and then be converted into a text message by means of a corresponding device. Furthermore, a voice message gathered by the user's terminal can be transmitted to the network node of the communication network via a communication connection and be converted into a text message there. Finally it is possible to transmit a voice message gathered by a terminal, which voice message has been converted into a text message by means of the terminal, to the network node of the communication network via a communication connection.

Advantageously, the message containing the individualized information is gathered by means of a computing unit of the communication network. Thanks to this embodiment, the data volume that is generated or has to be provided by a terminal in connection with the reminding functionality according to the invention will be reduced, in particular since the corresponding message does not have to be memorized by the user's terminal.

Another embodiment of the invention provides that the indexation of the words contained in the gathered message, the determination of key words on the base of the indexed words and/or the determination of at least one event relevant for the user using the determined key words are realized by means of a computing unit of the communication network. Advantageously, the reminding message is generated by means of at least one computing unit of the communication network.

In another embodiment of the invention, the at least one local information with respect to the local position of the user's terminal in the communication network is determined using terminal based and/or network based localization technologies. Advantageously, the at least one local information with respect to the local position of the user's terminal in the communication network is determined by means of a device of the terminal. In another embodiment of the invention, the at least one local information with respect to the local position of the user's terminal in the communication network is determined by means of at least one service of the communication network. If the respective local information is exclusively determined by means of a device of the mobile terminal, preferably satellite supported systems, such as GPS (GPS: Global Positioning System) will be used. Herein, the actual local position can be advantageously determined very precisely. Another improvement of the localization is advantageously obtained, if additionally network-based localization technologies are used. Therefore, a most preferred embodiment provides the use of A-GPS (A-GPS: Assisted GPS). In order to be able to offer the method according to the invention almost independent from the equipment of the respective terminals of the communication network users, it is provided according to the invention that also network-based methods, such as so called cell-ID-methods (ID: identifier) are used for determining the local position. Hereby, also mobile terminals having no device for determining their own local position without network support can be advantageously localized. E-OTD (E-OTD: Enhanced Observed Time Difference) is advantageously a localization method that offers the possibility to determine the respective local information by means of at least one service of the communication network. In another preferred embodiment, the respective local information is determined using an Indoor Positioning System. Thus, it is advantageously possible to determine the local information inside buildings, since the common GPS receivers are usually not suitable for receiving signals in buildings. Methods that are used according to the invention for this are also based upon radio cells. However, if the local position is determined by means of radio cells, it is usually not possible to determine on which floor a person is staying. Therefore, a preferred embodiment provides that the Indoor Positioning System uses local radio networks and/or short-range radio link, in particular WLAN or Bluetooth for determining the local position. Using access points that have been correspondingly set up in a building, the local position of a mobile terminal can be determined more precisely.

In another advantageous embodiment of the invention, the message according to process step a) is transmitted via the communication network within the scope of the determination by means of a service of the communication network and/or the reminding message according to process step f) is transmitted via the communication network within the scope of the signalization by means of a service of the communication network. A preferred embodiment of the invention provides the use of SMS and/or MMS as service of the communication network.

Another advantageous embodiment of the invention is characterized in that a message containing individualized information is entered by means of the user's terminal, the entered message is transmitted by means of a service of the communication network via the communication network to a computing unit of the communication network and is gathered there, the words contained in the gathered message are indexed by the computing unit, key words are determined on the base of the indexed words by means of the computing unit, at least one event relevant for the user is determined by the computing unit using the determined key words, at least one local information with respect to the local position of the user's terminal in the communication network is determined by the computing unit, at least one reminding message with respect to the determined event is generated by the computing unit in consideration of and/or dependent on the at least one determined local information, the generated reminding message is transmitted via the communication network to the user's terminal by means of a service of the communication network and signalized on the terminal.

Another advantageous embodiment of the invention is characterized by time information with respect to the event relevant for the user as constituent of the gathered message and/or as constituent of the determined event according to process step d). Advantageously, the reminding message is generated according to process step f) in consideration of and/or dependent on the time information. The embodiments according to the invention individually or in combination with each other permit that a user either defines or indicates time information with respect to the event relevant for him or that corresponding time information is determined in an automatised way according to the invention, in particular with respect to a possible relevance of the event for the user. According to the invention, it is thus possible, in case of gathering a shopping list, to recognize in an automatised way that the user needs the goods on the shopping list still on the same day, for example because the user's message containing the individualized information contains the words or key words "today" and "evening" or these ones are determined from it according to the invention.

In another advantageous embodiment of the invention, the reminding message according to process step f) will be signalized in temporally predefined and/or periodic intervals by means of the terminal until accomplishment.

Another advantageous embodiment of the invention provides that within the scope of generating the reminding message according to process step f) information with respect to the local position of the user's terminal in the communication network, which information is memorized in a database, will be integrated into the reminding message or connected to this one.

Advantageously, the reminding message according to process step f) will be actualized before the signalization according to process step g). The actualization will be advantageously realized automatically and/or upon request by the user, in particular by pressing keys on the terminal or similar entries. In case of a corresponding request by the user, the request entry will be transmitted via the communication network to a service unit of the communication network which realizes a reminding functionality according to the invention, whereupon the service unit of the communication network sends the generated reminding message via the communication network to the user's terminal.

For the technical solution of the initially mentioned problem, the present invention proposes a network node in a communication network, preferably a mobile network according to a GSM, GPRS and/or UMTS radio network standard, which node is at least partially involved in reminding a user of at least one event relevant for the user in an at least partially automatised way and is designed and/or adapted to at least partially carry out a method according to the invention.

The network node is advantageously characterized by a device for indexing the words contained in the gathered message, a device for determining key words on the base of the indexed words and/or a device for determining at least one event relevant for the user using the determined key words. The devices are advantageously respective computing units of the network node. The devices can advantageously also be realized by a single device, preferably a computing unit.

For the technical solution of the initially mentioned problem, the present invention furthermore proposes a terminal to be operated in a communication network, preferably a mobile network according to a GSM, GPRS and/or UMTS radio network standard, which is designed and/or adapted to at least partially carry out a method according to the invention.

Other details, characteristics and advantages of the invention will be explained in detail in the following by means of the exemplary embodiment represented in the figure of the drawing. Herein:

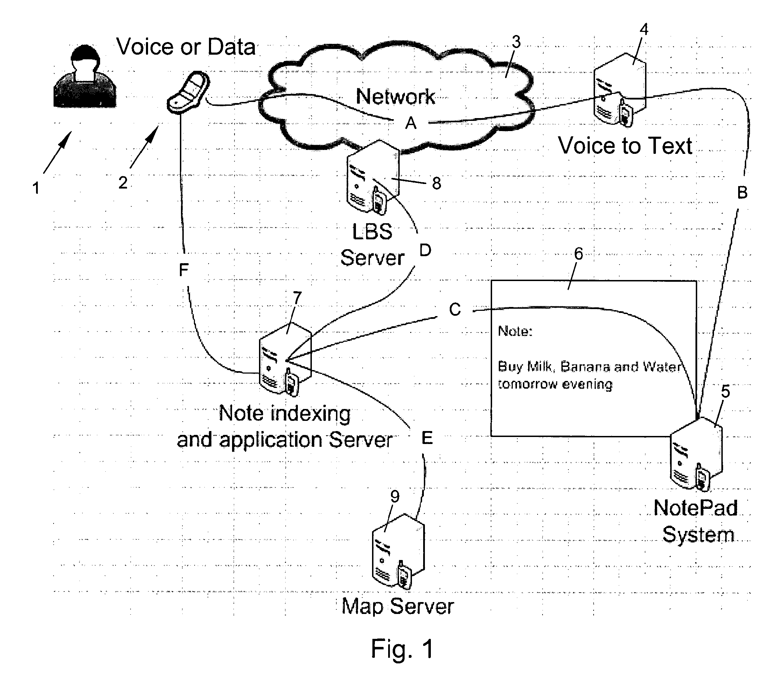

- Fig. 1: is a schematic diagram showing an exemplary embodiment for reminding a user of at least one event relevant for the user in an at least partially automatised way according to the invention.

Fig. 1 shows an exemplary embodiment of reminding a user 1 of an event relevant for the user 1 in an at least partially automatised way according to the invention.

In the present case, the user 1 comprises a mobile terminal 2 in form of a mobile phone 2 that is operable in a mobile network 3 according to a GSM, GPRS and/or UMTS radio network standard. In fig. 1 the mobile network 3 is symbolically represented by a cloud. The mobile network 3 comprises different devices and/or systems forming or realizing the mobile network 3, some of the devices that are involved in the execution of the method according to the invention being represented exemplarily in Fig. 1 (device 4 for converting the voice into a text, device 5 (Note Pad System), device 7 (Note indexing and application Server), device 8 (LBS Server) and device 9 (Map Server)).

The user 1 enters a message containing individualized information via his mobile phone 2. Herein, the user's 1 message containing individualized information can be gathered as text message or as voice message. As example, the user 1 enters the message containing individualized information via his mobile phone 2, wherein the message says that he has to buy "bananas, milk and water for tomorrow evening". In the present case, the user 1 enters the message as voice message. In the process step marked by A, the voice message is transmitted via the mobile network 3 to a device 4 that converts the voice message into a text message (Voice to Text). The corresponding text message, symbolically referenced in fig. 1 by the reference numeral 6, will be transmitted in the process step referenced by the reference numeral B to a device 5, in the present case a Note Pad Application Server realizing a so called Note Pad System, and is gathered there by memorization. The message memorized by the device 5 can then be advantageously used for a verification that is eventually later realized by the user or a service personal.

In the process step marked by C, the gathered message 6 will be transmitted to a device 7. The device 7 (Note Indexing and Application Server) allows an automatic indexing of the words contained in the gathered message 6, an automatic determination of key words on the base of the indexed words and an automatic determination of at least one event relevant for the user 1 using the determined key words. In the present case, the device 7 is realized by a computing unit (Note Indexing and Application Server). The device 7 indexes the words in the message 6 and searches for corresponding key words, in the present case for example "milk", "bananas", "water", "tomorrow" and "evening". On the base of this, the device 7 determines an event relevant for the user, in the present case the shopping of goods according to the shopping list for "tomorrow evening" in consideration of user individual preferences and/or patterns of behavior gathered by the mobile network 3. Herein, the user 1 can advantageously have memorized information by means of the mobile network 3 about how the predefined term "evening" has to be interpreted, for example in form of a time indication, such as "6:00 pm", or an indicated time period, such as "between 6:00 pm and 7:30 pm".

At the previously given time, in the present case for example "6:00 pm", the device 7 triggers the user's 1 mobile terminal 2 for determining the actual local position of the user's 1 mobile terminal 2. The triggering for determining the local information with respect to the local position of the user's 1 terminal 2 in the mobile network 3 is carried out by a device 8, in the present case a so called LBS Server (LBS: Location Based Services) in the process step marked by the reference numeral D in fig. 1. Herein, the device 8 (LBS server) requests the mobile terminal 2 via the mobile network 3 to communicate information with respect to the local position thereof in an automatised way, in particular such that the user 1 of the terminal 2 does not get to know anything about this or has to intervene actively. The corresponding local information of the user's 1 terminal 2 is then made available to the device 7 by the device 8.

In the process step referenced by the reference numeral E in fig. 1, the device 7 procures complementary information with respect to the local position, in the present case in particular a map with information about goods selling units for buying goods, in the present case in particular "milk", "bananas" and/or "water", while using the local information. The complementary information, in the present case the map with respect to the goods selling units, is transmitted by a device 9 providing the map (Map Server) to the device 7 or is fetched from there by the device 7.

The device 7 then generates a reminding message with respect to the determined event in consideration of and/or dependent on the determined local information and also on the complementary information, in the present case in particular the map with respect to the goods selling units.

The generated reminding message will then be transmitted by the device 7 by means of a message service of the mobile network 3, in the present case advantageously by means of MMS, to the user's 1 mobile terminal 2, and will be signalized by the terminal 2. The transmission is symbolically represented in fig. 1 by the process step referenced by F.

In the case that the user 1 does not want to or cannot react to the signalized message yet, for example because he wants to go for shopping later, the local position of the user's 1 terminal 2 will possibly change. In this case, the reminding message advantageously comprises an option for determining an actualization with respect to the local position of the user's 1 terminal 2and/or with respect to possible goods selling units. The corresponding option is advantageously represented in the reminding message as selectable request entry, for example as selectable keypad. Since correspondingly triggered requests are sometimes made by the user 1 only when this one has changed his local position, an actualization is advantageously carried out with respect to the local information or the reminding message. Another embodiment of the invention provides that a corresponding actualization is carried out automatically, in particular in case of a changed local position of the user 1.

Advantageously, a user profile of the user 1 can be memorized by the device 7, advantageously a user profile that the user can create himself. In such a user profile, the user's preferences with respect to events relevant for him can be advantageously gathered. Regarding the present case of reminding a user of shopping, for example preferences of the user 1 with respect to certain goods selling units, the distances from the working place, the residence or the actual local position, the quality of the goods, special offers and/or like characteristics can be included in the user profile. Advantageously, the device 7 can carry out an optimization with respect to the user's 1 preferences in consideration of the user profile in an automatised way.

The exemplary embodiments of the invention represented in the figure of the drawing and described in connection with this one only serve for explaining the invention and are not limiting for this one.

### List of reference numerals:

- 1: user
- 2: mobile terminal/mobile phone
- 3: mobile network
- 4: device/computing unit /Voice to Text)
- 5: device/computing unit (Note Pad System/Note Pad application server)
- 6: message/note
- 7: device/computing unit (Note indexing and application server)
- 8: device/computing unit (LBS server)
- 9: device/computing unit (map Server)
- A: process step
- B: process step
- C: process step
- D: process step
- E: process step
- F: process step

## Claims

1. A method for reminding a user of at least one event relevant for the user in an at least partially automatised way, wherein the user uses a terminal operable in a communication network, **characterized by** the following process steps:
a) gathering at least one message containing individualized information of a user with respect to at least one event relevant for the user;
b) indexing the words contained in the gathered message;
c) determining key words by means of the indexed words;
d) determining at least one event relevant for the user using the determined key words;
e) gathering at least one local information with respect to the local position of the user's terminal in the communication network;
f) generating at least one reminding message with respect to the determined event in consideration of and/or dependent on the at least one gathered local information and
g) signalizing the generated reminding message by the user's terminal.

2. A method according to claim 1, **characterized by** gathering complementary information with respect to the event determined in process step d) and by considering this complementary information within the scope of the generation of the reminding message according to process step f).

3. A method according to claim 1 or claim 2, **characterized in that** the message containing individualized information is gathered by a voice entry realized by means of the user's terminal and/or by a text entry realized by means of the user's terminal.

4. A method according to claim 3, **characterized in that** a voice message gathered by a voice entry is converted into a text message.

5. A method according to one of the claims 1 through 4, **characterized in that** the message containing the individualized information is gathered by means of a computing unit of the communication network.

6. A method according to one of the claims 1 through 5, **characterized in that** the indexation of the words contained in the gathered message, the determination of key words on the base of the indexed words and/or the determination of at least one event relevant for the user using the determined key words are realized by means of at least one computing unit of the communication network.

7. A method according to one of the claims 1 through 6, **characterized in that** the at least one local information with respect to the local position of the user's terminal in the communication network is determined using terminal based and/or network based localization technologies.

8. A method according to one of the claims 1 through 7, **characterized in that** the at least one local information with respect to the local position of the user's terminal in the communication network is determined by means of a device of the terminal.

9. A method according to one of the claims 1 through 8, **characterized in that** the at least one local information with respect to the local position of the user's terminal in the communication network is determined by means of at least one service of the communication network

10. A method according to one of the claims 1 through 9, **characterized in that** the reminding message is generated by at least one computing unit of the communication network.

11. A method according to one of the claims 1 through 10, **characterized in that** the message according to process step a) is transmitted via the communication network within the scope of the determination by means of a service of the communication network and/or the reminding message according to process step f) is transmitted via the communication network within the scope of the signalization by means of a service of the communication network.

12. A method according to one of the claims 1 through 11, **characterized in that** a message containing individualized information is entered by means of the user's terminal, the entered message is transmitted by means of a service of the communication network via the communication network to a computing unit of the communication network and is gathered there, the words contained in the gathered message are indexed by the computing unit, key words are determined on the base of the indexed words by means of the computing unit, at least one event relevant for the user is determined by the computing unit using the determined key words, at least one local information with respect to the local position of the user's terminal in the communication network is determined by the computing unit, at least one reminding message with respect to the determined event is generated by the computing unit in consideration of and/or dependent on the at least one determined local information, the generated reminding message is transmitted via the communication network to the user's terminal by means of a service of the communication network and signalized on the terminal.

13. A method according to one of the claims 1 through 12, **characterized by** time information with respect to the event relevant for the user as constituent of the gathered message and/or as constituent of the determined event according to process step d).

14. A method according to claim 13, **characterized in that** the reminding message is generated according to process step f) in consideration of and/or dependent on the time information.

15. A method according to one of the claims 1 through 14, **characterized in that** the reminding message according to process step f) will be signalized in temporally predefined intervals by means of the terminal until accomplishment.

16. A method according to one of the claims 1 through 15, **characterized in that** within the scope of generating the reminding message according to process step f) information with respect to the local position of the user's terminal in the communication network, which information is memorized in a database, will be integrated into the reminding message or connected to this one.

17. A method according to one of the claims 1 through 16, **characterized in that** the reminding message according to process step f) will be actualized before the signalization according to process step g).

18. A method according to claim 16, **characterized in that** the actualization will be realized automatically and/or upon request by the user.

19. A network node in a communication network, preferably a mobile network according to a GSM, GPRS and/or UMTS radio network standard, which node is at least partially involved in reminding a user of at least one event relevant for the user in an at least partially automatised way, **characterized in that** the network node is designed and/or adapted to at least partially carry out a method according to one of the claims 1 through 18.

20. A network node according to claim 19, **characterized by** a device for indexing the words contained in the gathered message, a device for determining key words on the base of the indexed words and/or a device for determining at least one event relevant for the user using the determined key words.

21. A terminal to be operated in a communication network, preferably a mobile network according to a GSM, GPRS and/or UMTS radio network standard, **characterized in that** it is designed and/or adapted to at least partially carry out a method according to one of the claims 1 through 18.
